# EUROPÄISCHE PATENTSCHRIFT

(11) **EP 2 761 205 B1**
(45) Veröffentlichungstag und Bekanntmachung des Hinweises auf die Patenterteilung: **19.09.2018**
(21) Anmeldenummer: 12745465.0
(22) Anmeldetag: 02.08.2012
(51) Int. Cl.: B60K 6/365, B60K 6/547

(54) **PLANETENGETRIEBE**
PLANETARY TRANSMISSION
TRANSMISSION À ENGRENAGES PLANÉTAIRES

(30) Priorität: 27.09.2011 DE 102011083507; 13.07.2012 DE 102012212257
(43) Veröffentlichungstag der Anmeldung: 06.08.2014
(73) Patentinhaber: ZF Friedrichshafen AG, 88046 Friedrichshafen (DE)
(72) Erfinder: GRIESMEIER, Uwe, 88677 Markdorf (DE); SCHARR, Stephan, 88045 Friedrichshafen (DE); VAHLENSIECK, Bernd, 88677 Markdorf (DE); BECK, Stefan, 88097 Eriskirch (DE); SIBLA, Christian, 88045 Friedrichshafen (DE)
(86) Internationale Anmeldenummer: PCT/EP2012/065150
(87) Internationale Veröffentlichungsnummer: WO 2013/045143

(56) Entgegenhaltungen:
- WO-A1-2008/138723
- DE-A1-102007 005 438
- US-A1- 2003 054 917

## Beschreibung

Die Erfindung betrifft ein Planetengetriebe gemäß dem Oberbegriff des Patentanspruchs 1.

Aus der DE 10 2007 005 438 A1 ist ein Planetengetriebe mit mehreren Planetenradsätzen und mehreren Schaltelementen bekannt, bei dem eine Elektromaschine mit ihrem Rotor mit einem der Planetenradsätze in Wirkverbindung steht, um ein an dem Planetenradsatz anliegendes Drehmoment zur Realisierung einer Übersetzung abzustützen. Eine Antriebswelle und eine Abtriebswelle des Getriebes sind koaxial zueinander angeordnet, so dass sich Antrieb und Abtrieb diametral gegenüberliegen, und die Elektromaschine ist koaxial zu den beiden Wellen angeordnet. Die Elektromaschine umschließt den ihr zugeordneten Planentenradsatz radial, wobei der Rotor der elektrischen Maschine mit einem Hohlrad des umschlossenen Planetenradsatzes fest verbunden ist. Das Hohlrad ist über ein formschlüssiges Schaltelement mit einem gehäusefesten Bauteil verbindbar. Ein Stator der elektrischen Maschine ist mit einem das Getriebe einschließlich der elektrischen Maschine umschließenden gehäusefesten Bauteil verbunden. Die Schaltelemente des Planetengetriebes sind als Reibkupplungen und Reibbremsen oder als Klauenkupplungen und Klauenbremsen ausgebildet, die mit einer geeigneten Aktuatorik, beispielsweise elektromotorisch, betätigbar sind. Mit drei Planetenradsätzen und vier Schaltelementen, von denen zwei als Schaltkupplungen und zwei als Schaltbremsen ausgebildet sind, sind bei diesem Getriebe insgesamt sechs Vorwärtsfahrstufen und eine Rückwärtsfahrstufe nutzbar.

Die Elektromaschine ersetzt bei einem Schaltvorgang ein reibschlüssiges Lastschaltelement eines herkömmlichen, mit Reibkupplungen und Reibbremsen ausgebildeten Planetengetriebes. Das Drehmoment der elektrischen Maschine wird dazu auf eine mit dem Abtrieb eines Hybridantriebstrangs eines Kraftfahrzeugs verbindbare Getriebeausgangswelle geführt. Um die Abmessungen der elektrischen Maschine möglichst klein zu halten, kann das durch die Elektromaschine abzustützende Drehmoment über eine temporäre Reduzierung des Antriebsmomentes eines Verbrennungsmotors des Hybridantriebs begrenzt werden. Bei einer entsprechenden Ansteuerung der Aktuatoren für die betreffenden Schaltelemente sind mit Hilfe der elektrischen Maschine zugkraftunterbrechungsfreie Schaltungen durchführbar, wobei die Synchronisierung der jeweiligen Schaltelemente durch die Elektromaschine erfolgt. Weiterhin sind bekannte Hybridfunktionen wie elektrisches Anfahren, ein rein elektrischer Fahrbetrieb, ein Rekuperationsbetrieb sowie ein Boostbetrieb möglich.

Derartige Planetengetriebe können insbesondere für Fahrzeuge mit einem Hybridantrieb oder einem so genannten Range-Extender-Elektroantrieb vorgesehen sein. Dabei wird jedoch bisher ein eher kleiner Teil der Bauteile des Getriebes in den radial inneren Bauraum der elektrischen Maschine hineingebaut, oder die Elektromaschine wird seitlich am Getriebe angeordnet, wodurch ein höherer Bauteilaufwand erforderlich ist und eine größere Baulänge entsteht, oder es werden bei einem Planetengetriebe trotz eingebauter Elektromaschine Reibschaltelemente im Getriebe verwendet, die relativ hohe Schleppverluste verursachen.

Außerdem ist aus der US 2003/0 054 917 A1 ein Planetengetriebe für ein Kraftfahrzeug bekannt, das drei miteinander gekoppelte Planetenradsätze sowie mehrere Schaltelemente aufweist. Diese drei Planetenradsätze weisen jeweils ein Sonnenrad, ein Hohlrad und einen Planetenträger auf, wobei bei dem ersten Planetenradsatz dessen Hohlrad mit einem gehäusefesten Bauteil verbindbar ist, wobei bei dem ersten Planetenradsatz dessen Planetenträger mit dem Hohlrad des zweiten Planetenradsatzes antriebsverbunden ist, wobei bei dem zweiten Planetenradsatz dessen Planetenträger mit dem Hohlrad des dritten Planetenradsatzes verbunden sowie bei dem zweiten Planetenradsatz dessen Sonnenrad von einer Getriebeeingangswelle antreibbar ist, wobei bei dem dritten Planetenradsatz dessen Planetenträger mit einer Getriebeausgangswelle verbunden ist, wobei das Sonnenrad des ersten Planetenradsatzes mit dem gehäusefesten Bauteil verbunden ist, und bei dem das Sonnenrad des dritten Planetenradsatzes mit dem Hohlrad des ersten Planetenradsatzes verbindbar ist.

Nachteilig an diesem Planetengetriebe ist, dass dieses vergleichsweise viele, nämlich fünf Schaltelemente aufweist, von denen vier Schaltelemente als Schaltkupplungen und ein Schaltelement als Bremse ausgebildet sind. Außerdem ist aus dieser Druckschrift nicht bekannt, wie an dieses Planetengetriebe eine Elektromaschine eines Hybridantriebs sinnvoll ankoppelbar ist. Hierzu ist der DE 10 2007 022 776 A1 der eher allgemein gehaltene Hinweis entnehmbar, dass auf jeder Welle des dort beschriebenen Planetengetriebes eine als Generator und/oder als Motor betreibbare Elektromaschine anbringbar ist.

Vor diesem Hintergrund liegt der Erfindung die Aufgabe zugrunde, ein Planetengetriebe der eingangs beschriebenen Art vorzustellen, das eine kompakte Bauform aufweist, kostengünstig in der Herstellung und effizient im Betrieb ist, sowie für die Nutzung in einem Hybridantriebsstrang eines Kraftfahrzeugs geeignet ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem kompakten Planetengetriebe mehrere gekoppelte Planetenradsätze in den radial inneren Bauraum einer elektrischen Maschine eingebaut werden können, die innerhalb eines Getriebegehäuse auf einer Welle angeordnet ist, und die in geeigneter Weise direkt mit Getriebekomponenten verbunden ist. In einem Parallelhybridantriebsstrang mit einem Verbrennungsmotor und der Elektromaschine ist es durch eine Kopplung der Elektromaschine mit dem Getriebeabtrieb bei einer entsprechenden Ansteuerung der elektrischen Maschine möglich, während aller im verbrennungsmotorischen Betrieb durchgeführten Schaltungen die Zugkraft des Antriebsstrangs aufrechtzuerhalten und die Schaltelemente zu synchronisieren. Außerdem kann die Elektromaschine für andere Funktionen genutzt werden, wie beispielsweise ein elektrisches Anfahren ohne zusätzliches Anfahrelement, ein rein elektrisches Fahren ohne zusätzliches Entkopplungselement für den Verbrennungsmotor, oder für das Starten des Verbrennungsmotors ausgehend von einem rein elektrischen Fahrbetrieb. Für das elektrische Anfahren und das elektromotorische Starten des Verbrennungsmotors ist kein zusätzliches Anfahr- bzw. Trennelement erforderlich. Für das rein elektrische Fahren ist außerdem kein zusätzliches Entkopplungselement für den Verbrennungsmotor notwendig.

Demnach geht die Erfindung aus von einem Planetengetriebe für einen Hybridantrieb eines Kraftfahrzeugs, mit einem ersten Planetenradsatz, einem zweiten Planetenradsatz und einem dritten Planetenradsatz, welche jeweils ein Sonnenrad, ein Hohlrad und einen Planetenträger aufweisen, und mit mehreren Schaltelementen, wobei bei dem ersten Planetenradsatz dessen Hohlrad mit einem gehäusefesten Bauteil verbindbar ist, wobei bei dem ersten Planetenradsatz dessen Planetenträger mit dem Hohlrad des zweiten Planetenradsatzes antriebsverbunden ist, wobei bei dem zweiten Planetenradsatz dessen Planetenträger mit dem Hohlrad des dritten Planetenradsatzes verbunden sowie bei dem zweiten Planetenradsatz dessen Sonnenrad von einer Getriebeeingangswelle antreibbar ist, wobei bei dem dritten Planetenradsatz dessen Planetenträger mit einer Getriebeausgangswelle verbunden ist, wobei das Sonnenrad des ersten Planetenradsatzes mit dem gehäusefesten Bauteil verbunden ist, und bei dem das Sonnenrad des dritten Planetenradsatzes mit dem Hohlrad des ersten Planetenradsatzes verbindbar ist.

Zur Lösung der gestellten Aufgabe ist bei diesem Planetengetriebe außerdem vorgesehen, dass die drei Planetenradsätze zur Realisierung von mindestens fünf zugkraftunterbrechungsfrei schaltenden Vorwärtsgangstufen über vier Schaltelemente schaltbar sind, wobei drei der Schaltelemente als Schaltkupplungen ausgebildet sind, und zwar entweder als drei unsynchronisierte formschlüssige Schaltkupplungen oder als zwei unsynchronisierte formschlüssige Schaltkupplungen und ein Lastschaltelement, und wobei eines der Schaltelemente als eine unsynchronisierte formschlüssige Schaltbremse ausgebildet ist, und mit wenigstens einer Elektromaschine, die einer Welle innerhalb des Getriebes zugeordnet ist, wobei bei dem dritten Planetenradsatz (RS3) dessen Sonnenrad (SR3) mit einem Rotor (RO) der Elektromaschine (EM) verbunden ist.

Durch diese Anordnung ist ein Planetengetriebe mit einer besonders kompakten Bauform geschaffen, das fünf zugkraftunterbrechungsfrei schaltbare Vorwärtsgangstufen aufweist und welches beispielsweise in einen Hybridantriebsstrang oder einen Range-Extender-Elektroantriebsstrang integriert werden kann. Dieses Planetengetriebe ermöglicht einen rein elektrischen Fahrbetrieb, sofern der Rotor der elektrischen Maschine mit der Getriebeausgangswelle verbindbar angeordnet und der Verbrennungsmotor vom Antriebsstrang abkuppelbar ist.

Durch den Einbau zweier oder mehr Planetenradsätze und einem oder mehr Schaltelementen innerhalb des radialen Bauraumes der elektrischen Maschine ist eine kurze axiale Länge des Antriebsstranges, bestehend aus Getriebe und Elektromaschine, erreichbar. Zusätzliche Gehäuse oder seitlich überstehende Gehäuseteile sind für die Elektromaschine demnach nicht erforderlich. Die Elektromaschine kann vollständig innerhalb eines Getriebegehäuses angeordnet sein. Stirnradstufen für die Anbindung der elektrischen Maschine an den Antriebsstrang können entfallen, was sich günstig auf den Wirkungsgrad des Antriebs in einem elektrischen Fahrbetrieb auswirkt. Die ausgedehnte axiale Überdeckung von Getriebeteilen bewirkt zudem eine gute akustische Abschirmung von Verzahnungsgeräuschen, so dass sich das Getriebe besonders leise und damit komfortabel im Fahrbetrieb verhalten kann.

Das vorgestellte Planetengetriebe kann zusätzlich oder alternativ durch weitere Merkmale gekennzeichnet sein, die dessen Kompaktheit, Baukosten und Schaltfunktionen positiv bestimmen. Sofern dabei eine Verbindbarkeit von Getriebebauteilen vorgesehen ist, so wird diese durch die bereits genannten, hilfskraftbetätigbaren Schaltelemente bewerkstelligt.

So kann vorgesehen sein, dass bei dem zweiten Planetenradsatz dessen Hohlrad mit dem dortigen Planetenträger verbindbar ist, dass bei dem dritten Planetenradsatz dessen Hohlrad mit dem dortigen Sonnerad verbindbar ist, und dass bei dem ersten Planetenradsatz der Planetenträger mit der Getriebeeingangswelle verbindbar ist.

Weiter kann zusätzlich oder alternativ vorgesehen sein, dass bei dem zweiten Planetenradsatz dessen Planetenträger mit der Getriebeeingangswelle verbindbar ist, dass bei dem dritten Planetenradsatz dessen Hohlrad mit dem dortigen Planetenträger verbindbar ist, und dass bei dem dritten Planetenradsatz dessen Hohlrad mit der Getriebeausgangswelle verbindbar ist.

Außerdem kann zusätzlich oder alternativ vorgesehen sein, dass bei dem dritten Planetenradsatz dessen Sonnenrad mit der Getriebeausgangswelle verbunden ist, dass die Getriebeeingangswelle koaxial innerhalb der Getriebeausgangswelle angeordnet ist und sich ihre Eingangsseite an der gleichen Getriebeseite wie die Getriebeausgangswelle befindet.

Gemäß einer anderen Weiterbildung kann vorgesehen sein, dass die Elektromaschine mindestens zwei der drei Planetenradsätze und mindestens eines der Schaltelemente radial umschließt, wobei der mit der Getriebeausgangswelle verbundene Planetenradsatz mit derjenigen Welle wirkverbunden oder wirkverbindbar ist, welche der Elektromaschine zugeordnet ist. Dabei kann die Elektromaschine die zu der Getriebeausgangswelle hin zugewandten zweiten und dritten Planetenradsätze von den insgesamt drei Planetenradsätzen radial umschließen sowie axial übergreifen, wobei die der Elektromaschine zugeordnete Welle das Sonnenrad des dritten Planetenradsatzes oder die mit dem Sonnenrad des dritten Planetenradsatzes verbunden Welle ist.

Die Umschließung der mindestens zwei Planetenradsätze kann einfach dadurch erreicht sein, dass die der Elektromaschine zugeordnete Welle eines der beiden Planetenradsätze im Längsschnitt topfartig ausgebildet ist und von dem benachbarten Rotor oder Stator der elektrischen Maschine überdeckt ist bzw. mit diesem wirkverbunden ist, und die übrigen Komponenten der beiden Planetenradsätze innerhalb dieser Topfwelle angeordnet sind.

Die Elektromaschine kann als Innenläufer oder Außenläufer ausgebildet sein, also einen radial innen oder radial außen angeordneten Rotor aufweisen. Dadurch kann die Antriebsanordnung leichter an vorhandene Bauraumverhältnisse angepasst werden.

Grundsätzlich kann an das Planetengetriebe auch eine weitere Elektromaschine angekoppelt sein. Insbesondere dann, wenn eine Getriebeeingangswelle in voller Länge durch das Getriebe hindurchgeführt ist, kann die zweite Elektromaschine an dem freien Ende dieser Getriebeeingangswelle angeordnet und antriebswirksam mit dieser verbunden sein.

Der Getriebeaufbau kann dadurch konkretisiert sein, dass bei dem ersten Planetenradsatz das Sonnenrad mit dem gehäusefesten Bauteil verbunden ist, das dortige Hohlrad mit dem gehäusefesten Bauteil verbindbar ist, dieses Hohlrad mit dem Sonnenrad des dritten Planetenradsatzes koppelbar ist, und der Planetenträger mit dem Hohlrad des zweiten Planetenradsatzes verbunden ist, dass bei dem zweiten Planetenradsatz das Sonnenrad mit einer Getriebeeingangswelle verbunden ist, der Planetenträger mit dem Hohlrad des zweiten Planetenradsatzes koppelbar ist, sowie der Planetenträger mit dem Hohlrad des dritten Planetenradsatzes verbunden ist, und dass bei dem dritten Planetenradsatz das Hohlrad mit dem Sonnenrad des dritten Planetenradsatzes koppelbar ist, und der Planetenträger mit einer Getriebeausgangswelle verbunden ist. Die Getriebeausgangswelle ist hierbei koaxial sowie axial benachbart zu der Getriebeeingangswelle angeordnet.

Bei diesem Getriebeaufbau kann mit Hilfe der Elektromaschine bei allen Schaltungen die Zugkraft aufrechterhalten werden. Dadurch werden Schleppverluste reduziert oder vermieden. So kann eine Anfahrkupplung oder ein Drehmomentwandler mit Überbrückungskupplung entfallen. Je nach Ausführung des Getriebes können alle oder zumindest die meisten Schaltelemente als Klauenschaltelemente ausgebildet sein. Die Herstellungskosten können dadurch im Vergleich zu konventionellen Planetengetrieben erheblich verringert und der nötige Bauraum für die Schaltelemente verkleinert werden.

Es ist möglich, mit Hilfe der Elektromaschine einen Anfahrvorgang durchzuführen, wobei für den elektromotorischen Anfahrgang die Übersetzung eines ersten verbrennungsmotorischen Anfahrgangs nutzbar ist. Ein Wechsel aus dem elektromotorischen Anfahrgang in die verbrennungsmotorischen ersten und zweiten Gänge ist möglich.

Weiterhin ist mit der vorliegenden Getriebestruktur, zusätzlich zu den zugkrafterhaltend schaltbaren Vorwärtsgangstufen, ein kurz übersetzter, zugkraftunterbrechend schaltender elektrisch betreibbarer Gang einstellbar.

Die Getriebestruktur ermöglicht eine flexible Anordnung der Schaltelemente, um die zugeordneten Aktuatoren zu deren Betätigung möglichst Bauraum sparend und einfach in das Getriebe implementieren zu können. Insbesondere können diejenigen Schaltelemente, welche zur Verblockung der einzelnen Planetenradsätze vorgesehen sind, in wirkungsgleichen jedoch verschiedenen Positionen angeordnet werden.

Dies kann bei der genannten Getriebestruktur dadurch realisiert sein, dass bei dem zweiten Planetenradsatz anstelle einer schaltbaren Kupplung zwischen dem Planetenträger mit dem Hohlrad eine schaltbare Kupplung zwischen dem Planetenträger und dem Sonnenrad oder eine schaltbare Kupplung zwischen dem Hohlrad des zweiten Planetenradsatzes und dem Sonnenrad vorgesehen ist, und dass bei dem dritten Planetenradsatz anstelle einer schaltbaren Kupplung zwischen dem Hohlrad und dem Sonnenrad eine schaltbare Kupplung zwischen dem Planetenträger und dem Hohlrad oder eine schaltbare Kupplung zwischen dem Planetenträger und dem Sonnenrad vorgesehen ist.

Außerdem ist es so weit erforderlich möglich, auf den Wellen Freiläufe anzuordnen, die gegenüber anderen Wellen oder Gehäuseteilen wirksam sind.

Um eine für einen Front-Quer-Einbau in ein Fahrzeug besonders geeignete Anordnung zu erreichen, kann die Getriebeeingangswelle des Getriebes auf die Seite der Getriebeausgangswelle angeordnet sein.

Dies kann nach einer weiteren Ausführungsform der Erfindung dadurch konkretisiert sein, dass bei dem ersten Planetenradsatz das Sonnenrad mit dem gehäusefesten Bauteil verbunden sowie das dortige Hohlrad mit dem gehäusefesten Bauteil verbindbar ist, und dass bei dem zweiten Planetenradsatz das Sonnenrad mit einer Getriebeeingangswelle verbunden ist, das Hohlrad mit dem Planetenträger des ersten Planetenradsatzes verbunden ist sowie der Planetenträger mit dem Sonnenrad koppelbar ist, und dass bei dem dritten Planetenradsatz das Sonnenrad mit der Abtriebswelle koppelbar sowie mit dem Hohlrad des ersten Planetenradsatzes koppelbar ist, das Hohlrad mit dem Planetenträger des zweiten Planetenradsatzes verbunden ist und der Planetenträger mit der Abtriebswelle verbunden ist. Die Getriebeeingangswelle ist dabei koaxial innerhalb der Getriebeausgangswelle angeordnet und ihre Eingangsseite befindet sich an der gleichen Getriebeseite wie die Getriebeausgangswelle. Als Eingangsseite der Getriebeeingangswelle wird dabei dasjenige Ende dieser Welle verstanden, mit dem diese mit einem Verbrennungsmotor verbunden oder verbindbar ist.

Zur Verdeutlichung der Erfindung ist der Beschreibung eine Zeichnung mit drei Ausführungsbeispielen beigefügt. In dieser zeigt
- Fig. 1: ein Getriebeschema eines Planetengetriebes mit drei Planetenradsätzen und einer Elektromaschine,
- Fig. 2a: eine Übersetzungstabelle der Planetenradsätze des Getriebes der Fig. 1,
- Fig. 2b: eine Schalttabelle des Getriebes der Fig. 1,
- Fig. 3: das Getriebeschema der Fig. 1 mit dazu alternativen Schaltelementanordnungen, und
- Fig. 4: eine zweite Ausführungsform eines Planetengetriebes mit einer Elektromaschine gemäß der Erfindung.

Zur Vereinfachung sind in den Figuren funktions- oder wirkungsgleiche Bauteile mit gleichen Bezugszeichen versehen. Es ist jeweils eine obere oder untere Hälfte eines Längsschnittes des jeweiligen Getriebeschemas dargestellt.

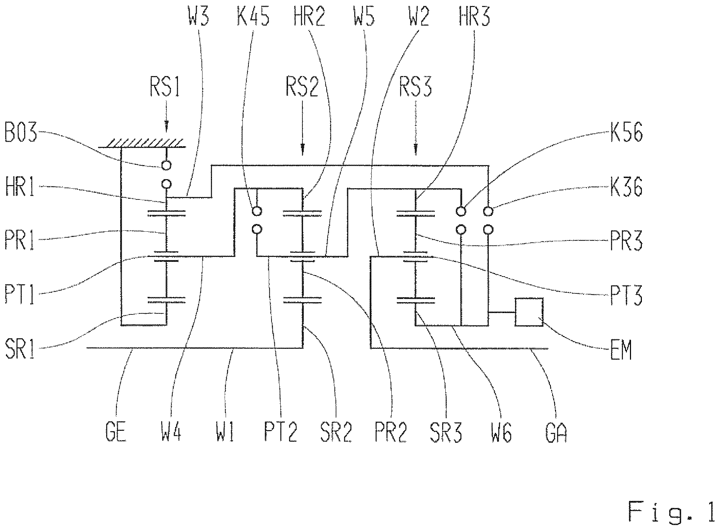

Demnach zeigt Fig. 1 ein Planetengetriebe eines Hybridantriebsstrangs eines Kraftfahrzeugs, das drei einfache Planetenradsätze RS1, RS2, RS3 und vier Schaltelemente B03, K45, K56, K36 umfasst, wobei die Schaltelemente B03, K45 und K36 als Klauenschaltelemente ausgebildet sind, während das Schaltelement K56 als Klauenschaltelement oder Lastschaltelement, insbesondere Reibschaltelement ausgebildet sein kann. Zur Verdeutlichung sind die Bezeichnungen der Schaltelemente zu im Folgenden erläuterten Wellen bzw. Gehäuseteilen in Verbindung gesetzt, die über die Schaltelemente miteinander koppelbar sind.

Bei einem ersten Planetenradsatz RS1 ist ein zentrales Sonnenrad SR1 mit einem nicht näher bezeichneten gehäusefesten Bauteil verbunden. Ein äußeres Hohlrad HR1 ist über ein als Klauenbremse ausgebildetes Schaltelement B03 mit dem gehäusefesten Bauteil verbindbar. Das Hohlrad HR1 ist außerdem über eine zugeordnete Welle W3 und eine weitere Welle W6 mit einem Sonnenrad SR3 eines dritten Planetenradsatzes RS3 koppelbar. Zur Realisierung einer schaltbaren Kopplung des Hohlrades HR1 des ersten Planetenradsatz RS1 mit dem Sonnenrad SR3 des dritten Planetenradsatzes RS3 ist ein als Klauenkupplung ausgebildetes Schaltelement K36 zwischen den beiden Wellen W3 und W6 angeordnet. Ein Planetenträger PT1, der zur Führung mehrerer zwischen dem Sonnenrad SR1 und dem Hohlrad HR1 angeordneten Planetenrädern PR1 ausgebildet ist, ist über eine Welle W4 mit einem Hohlrad HR2 eines zweiten Planetenradsatzes RS2 verbunden.

Bei dem zweiten Planetenradsatz RS2 ist ein Sonnenrad SR2 über eine zugeordnete Welle W1 mit einer Antriebs- bzw. Getriebeeingangswelle GE verbunden. Die Getriebeeingangswelle GE ist mit einem nicht dargestellten Verbrennungsmotor triebverbindbar oder triebverbunden. Ein Planetenträger PT2, der die zugehörigen Planetenräder PR2 des zweiten Planetenradsatz RS2 führt, ist über ein als Klauenkupplung ausgebildetes Schaltelement K45 mit dem Hohlrad HR2 koppelbar. Durch diese Kopplung ist der Planetenradsatz RS2 verblockbar. Außerdem ist der Planetenträger PT2 über eine Welle W5 mit einem Hohlrad HR3 des dritten Planetenradsatzes RS3 verbunden. Bei der Verblockung des zweiten Planentenradsatzes RS2 ergibt sich somit gleichzeitig eine Wirkverbindung zwischen dem ersten Planetenradsatz RS1 und mit dem dritten Planetenradsatz RS3.

Bei dem dritten Planetenradsatz RS3 ist das Hohlrad HR3 über das Schaltelement K56, welches als Klauenschaltelement oder Lastschaltelement, insbesondere Reibschaltelement ausgebildet sein kann, mit dem Sonnenrad SR3 dieses Planetenradsatzes RS3 koppelbar. Ein Planetenträger PT3, der die zugehörigen Planetenräder PR3 des dritten Planetenradsatz RS3 führt, ist über eine zugeordnete Welle W2 mit einer Abtriebs- bzw. Getriebeausgangswelle GA verbunden, die über ein nicht dargestelltes Differenzial oder dergleichen mit den angetriebenen Rädern des Fahrzeugs triebverbunden bzw. triebverbindbar ist.

Die Getriebeausgangswelle GA und die Getriebeeingangswelle GE sind koaxial sowie axial benachbart auf gegenüberliegenden Getriebeseiten angeordnet.

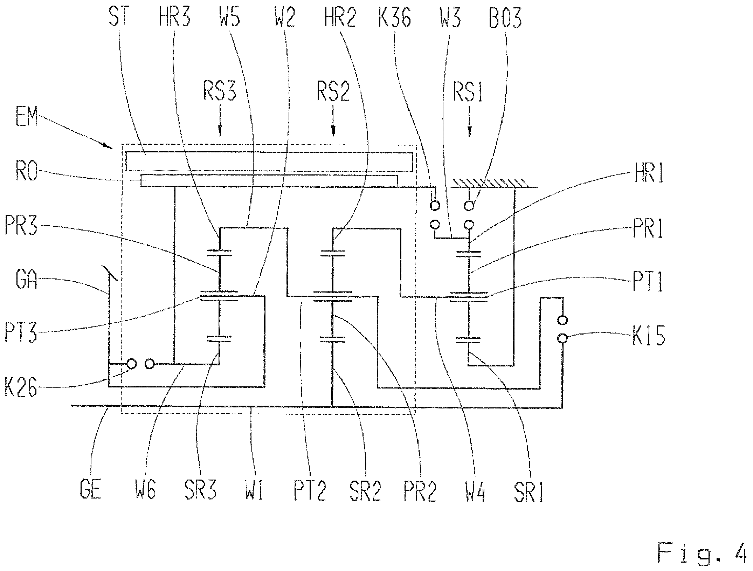

In das Getriebe ist eine Elektromaschine EM integriert, die koaxial zu der Getriebeeingangswelle GE und der Getriebeausgangswelle GA angeordnet sowie innerhalb eines nicht dargestellten Getriebegehäuses angeordnet ist. Sie umschließt die Getriebeanordnung teilweise. Die Elektromaschine EM ist an die Sonnenradwelle W6 des dritten Planetenradsatzes RS3 triebtechnisch angeschlossen. Dies ist in der Fig. 1 ebenso wie die teilweise radiale Umschließung von Planetenradsätze und Schaltelemente des Getriebes nur schematisch abgebildet. Eine derartige radiale Umschließung von mindestens zwei der drei Planetenradsätze sowie mindestens eines der Schaltelemente durch die Elektromaschine EM ist in dem in Fig. 4 gezeigten Ausführungsbeispiel genauer dargestellt.

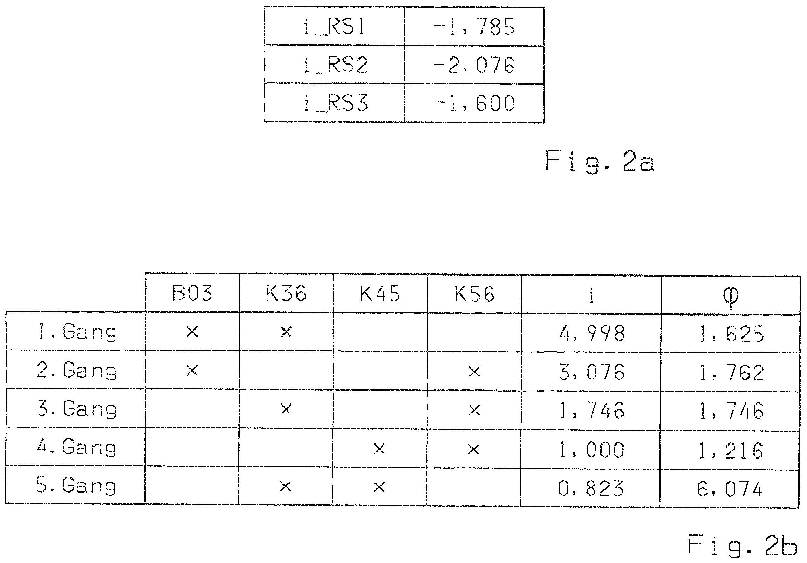

Eine Tabelle von möglichen Standübersetzungen der drei Radsätze RS1, RS2, RS3 geht aus der Fig. 2a hervor. Fig. 2b zeigt ein mögliches Schaltschema des Getriebes gemäß der Fig. 1. Daraus ist ersichtlich, dass in fünf realisierbaren Vorwärtsgangstufen jeweils zwei der Schaltelemente B03, K36, K45, K56 geschlossen sind. Die daraus sich ergebenden Übersetzungen i der Gänge und die zugehörigen Gangsprünge ϕ sind ebenfalls aus der Tabelle der Fig. 2b entnehmbar. Die Standübersetzungen i_RS1, i_RS2, i_RS3, Gangübersetzungen i und Gangsprünge ϕ von Fig. 2a und Fig. 2b sind lediglich als Zahlenbeispiele zu verstehen.

Die Funktionsweise des Planetengetriebes der Fig. 1 ist folgende:
Für ein elektrodynamisches Anfahren (EDA-Betrieb) wird die Schaltbremse B03 geschlossen. Die Planetenträgerwelle W4 des ersten Radsatzes RS1 steht still. Am zweiten Radsatz RS2 geht die Übersetzung von der Sonnenradwelle W1 (Getriebeeingangswelle GE) auf die Planetenträgerwelle W5 des zweiten Radsatzes RS2 ins Langsame, also hin zu kleinen Abtriebsdrehzahlen. Am dritten Radsatz RS3 findet eine weitere Übersetzung ins Langsame statt, wobei die Elektromaschine EM mit einem für das Anfahren geeigneten Gegenmoment das Drehmoment des Sonnenrades SR3 abstützt.

Für ein Schalten mit Zugkrafterhaltung am Abtrieb (GA) kann aus dem EDA-Betrieb in den verbrennungsmotorischen ersten Gang gewechselt werden, indem bei einem Nulldurchgang der Drehzahl der Elektromaschine EM bei geschlossener Bremse B03 die zugehörige Schaltkupplung K36 geschlossen wird.

Durch Schließen der ebenfalls zugehörigen Schaltkupplung K56 bei Drehzahlgleichheit der entsprechenden Wellen W5 und W6 gelangt man bei geschlossener Bremse B03 und geöffneter Schaltkupplung K36 alternativ aus dem EDA-Betrieb in den zweiten Gang.

Weiterhin kann mittels der Zugkrafterhaltung am Abtrieb über die EDA-Funktion aus der direkten Übersetzung i = 1 des vierten Ganges, bei dem die Schaltkupplungen K45 und K56 der zweiten und dritten Radsätze RS2, RS3 geschlossen sind, in die Schnellübersetzung i = 0,823 des fünften Ganges geschaltet werden, indem durch eine geeignete Drehzahlverstellung der Elektromaschine EM und des Verbrennungsmotors das eine Schaltelement K56 des dritten Radsatzes RS3 ausgelegt und synchron dazu das andere Schaltelement K36 des dritten Radsatzes RS3 eingelegt wird.

Im Übrigen kann durch eine Abtriebskopplung der Elektromaschine EM mit Zugkrafterhaltung zwischen allen Gängen, bei denen die erste Schaltkupplung K56 des dritten Radsatzes RS3 geschlossen ist, gewechselt werden, indem die Elektromaschine EM das jeweilige Abtriebsmoment aufrechterhält und am Verbrennungsmotor durch eine geeignete Ansteuerung die Motordrehzahl an die des jeweils neuen Ganges anpasst wird. Die betreffenden Gangwechsel mit Beteiligung des zweiten, dritten bzw. vierten Gangs sind aus der Tabelle entnehmbar. Somit sind alle Gangwechsel zugkrafterhaltend schaltbar.

Ein rein elektrisches Fahren ist bei geschlossener erster Schaltkupplung K56 des dritten Radsatzes RS3 auch möglich, sofern die weiteren Schaltelemente B03, K36, K45 offen geschaltet sind und der Verbrennungsmotor damit vom Antriebsstrang triebmäßig abgekoppelt ist. Ein Starten des Verbrennungsmotors aus diesem Zustand ist grundsätzlich jederzeit durch Schließen eines der weiteren Schaltelemente B03, K36, K45 möglich. Je nach Fahrgeschwindigkeit kann der Verbrennungsmotor also entsprechend wahlweise im zweiten Gang, dritten Gang oder vierten Gang aus dem elektrischen Betrieb hinzugeschaltet werden.

Zusätzlich ist ein elektromotorisch angetriebener erster Gang mit einer kurzen Übersetzung i = 2,6 (entsprechend dem Zahlenbeispiel) darstellbar, der zugkraftunterbrechend geschaltet werden kann. Dieser Gang steht durch Schließen der Schaltkupplung K45 des zweiten Radsatzes RS2 und der Schaltbremse B03 zur Verfügung.

Wird das Schaltelement K56 in einer alternativen Ausgestaltung lastschaltbar als Lastschaltelement, insbesondere Reibschaltelement ausgeführt, kann aus dem elektromotorisch angetriebenen ersten Gang mit einer kurzen Übersetzung in einen elektromotorisch angetriebenen Gang mit längerer Übersetzung lastschaltbar, d.h. mit Zugkrafterhaltung gewechselt werden.

Außerdem ist ein Ladebetrieb zum Aufladen eines elektrischen Energiespeichers möglich, indem der EDA-Betrieb eingestellt wird, dabei aber der Abtrieb, beispielsweise über eine vorhandene Feststellbremse, fest gebremst wird.

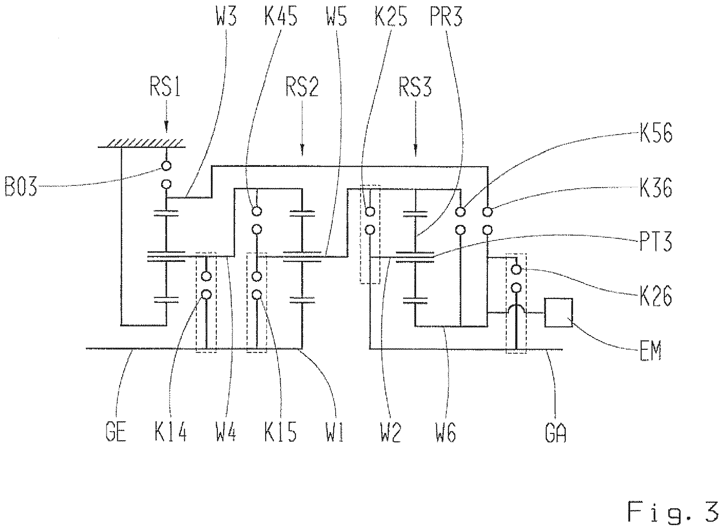

Die Fig. 3 zeigt alternative Möglichkeiten zur wirkungsgleichen Verblockung der zweiten und dritten Radsätze RS2, RS3 des Getriebes gemäß Fig. 1. Anstelle des Schaltelements K45 des zweiten Radsatzes RS2, welches das Hohlrad HR2 des zweiten Radsatzes RS2 mit dem Planetenträger PT2 des ersten Radsatzes RS1 koppelt, kann ein Schaltelement K14 für eine Hohlrad-Sonnenrad-Kopplung (HR2/SR2) oder ein Schaltelement K15 für eine Planetenträger-Sonnenrad-Kopplung (PT2/SR2) des zweiten Radsatzes RS2 angeordnet sein. Entsprechend kann anstelle des Schaltelements K56 des dritten Radsatzes RS3, welches das Hohlrad HR3 des dritten Radsatzes RS3 mit dessen Sonnenrad SR3 koppelt, auch ein Schaltelement K25, welches als Klauenschaltelement oder Lastschaltelement, insbesondere Reibschaltelement ausgebildet sein kann, für eine Hohlrad-Planetenträger-Kopplung (HR3/PT3) des dritten Radsatzes RS3 oder ein Schaltelement K26, weiches als Klauenschaltelement oder Lastschaltelement, insbesondere Reibschaltelement ausgebildet sein kann, für eine Planetenträger-Sonnenrad-Kopplung (PT3/SR3) des dritten Radsatzes RS3 angeordnet sein. Somit ergeben sich jeweils drei Verblockungsmöglichkeiten für den zweiten Radsatz RS2 und den dritten Radsatz RS3.

Die Fig. 4 zeigt ein Planetengetriebe, welches die gleichen Funktionen und Wirkungsweise wie das Getriebe der Fig. 1 zur Verfügung stellt, bei dem jedoch der Antrieb und der Abtrieb auf einer Getriebeseite anstatt axial gegenüberliegend angeordnet sind. Die Getriebeausgangswelle GA ist demnach an der hier verbrennungsmotorischen Eingangsseite der Getriebeeingangswelle GE angeordnet. Außerdem ist die axiale Position des ersten und des dritten Planetenradsatzes RS1, RS3 gegenüber dem Ausführungsbeispiel der Fig. 1 axial vertauscht.

Bei einem ersten Planetenradsatz RS1 dieses Getriebes, der hier fern vom Verbrennungsmotor angeordnet ist, ist ein zentrales Sonnenrad SR1 mit einem nicht näher bezeichneten gehäusefesten Bauteil verbunden. Ein äußeres Hohlrad HR1 ist über ein als Klauenbremse ausgebildetes Schaltelement B03 mit dem gehäusefesten Bauteil verbindbar. Das Hohlrad HR1 ist außerdem über eine zugeordnete Welle W3 und eine weitere Welle W6 mit einem Sonnenrad SR3 eines dritten Planetenradsatzes RS3 koppelbar. Zur Realisierung einer schaltbaren Kopplung des Hohlrades HR1 des ersten Planetenradsatz RS1 mit dem Sonnenrad SR3 des dritten Planetenradsatzes RS3 ist ein als Klauenkupplung ausgebildetes Schaltelement K36 zwischen den beiden Wellen W3 und W6 angeordnet. Ein Planetenträger PT1, der zur Führung mehrerer zwischen dem Sonnenrad SR1 und dem Hohlrad HR1 angeordneten Planetenräder PR1 ausgebildet ist, ist über eine Welle W4 mit einem Hohlrad HR2 eines zweiten Planetenradsatzes RS2 verbunden.

Bei dem zweiten Planetenradsatz RS2 ist ein Sonnenrad SR2 über eine zugeordnete Welle W1 mit einer Antriebs- bzw. Getriebeeingangswelle GE verbunden. Die Getriebeeingangswelle GE ist mit einem nicht dargestellten Verbrennungsmotor triebverbindbar oder triebverbunden. Ein Planetenträger PT2, der die zugehörigen Planetenräder PR2 des zweiten Planetenradsatz RS2 führt, ist über ein als Klauenkupplung ausgebildetes Schaltelement K15 mit dem Sonnenrad SR2 dieses des zweiten Radsatzes RS2 koppelbar. Durch diese Kopplung ist der Planetenradsatz RS2 verblockbar. Außerdem ist der Planetenträger PT2 über eine Welle W5 mit einem Hohlrad HR3 des dritten Planetenradsatzes RS3 verbunden. Über das Hohlrad HR2 und den Planetenträger PT2 des zweiten Planetenradsatzes RS2 ergibt sich auch eine Triebverbindung zwischen dem ersten Planetenradsatz RS1 und dem dritten Planetenradsatz RS3.

Bei dem dritten Planetenradsatz RS3 ist das Sonnenrad SR3 über ein Schaltelement K26, welches als Klauenschaltelement oder Lastschaltelement, insbesondere Reibschaltelement ausgebildet sein kann, mit seinem Planetenträger PT3 koppelbar. Der Planetenträger PT3, der die zugehörigen Planetenräder PR3 des dritten Planetenradsatz RS3 führt, ist über eine zugeordnete Welle W2 mit einer Abtriebs- bzw. Getriebeausgangswelle GA verbunden, die über ein nicht dargestelltes Differenzial oder dergleichen mit den angetriebenen Räder des Fahrzeugs triebverbunden bzw. triebverbindbar ist.

Die Getriebeausgangswelle GA bzw. die mit ihr verbundene Welle W2 ist koaxial über der Getriebeeingangswelle GE sowie auf der gleichen Getriebeseite angeordnet.

Eine Elektromaschine EM ist koaxial über der Getriebeeingangswelle GE und der Getriebeausgangswelle GA bzw. der mit ihr verbundenen Welle W2 angeordnet. Die Elektromaschine EM hat einen vergleichsweise großen Durchmesser und umschließt radial den zweiten Planetenradsatz RS2 und den dritten Planetenradsatz RS3 sowie das Schaltelement K26 des dritten Planetenradsatzes RS3. Dazu erstreckt sich die Elektromaschine EM auch axial über den durch diese Getriebebestandteile eingenommenen axialen Bauraum. Um dies zu ermöglichen ist die Sonnenradwelle W6 des dritten Planetenradsatzes RS3 topfartig ausgebildet, so dass der Rotor RO oder Stator ST der elektrischen Maschine EM, je nach Ausführung der elektrischen Maschine EM als Innenläufer oder Außenläufer, direkt auf der zugeordneten Welle W6 angeordnet und mit dieser wirkverbunden ist.

### Bezugszeichenliste

- B03: Schaltelement, Schaltbremse
- EM: Elektromaschine
- GA: Getriebeausgangswelle
- GE: Getriebeeingangswelle
- HR1: Hohlrad Radsatz RS1
- HR2: Hohlrad Radsatz RS2
- HR3: Hohlrad Radsatz RS3
- i: Übersetzung
- i_RS1: Übersetzung Radsatz RS1
- i_RS2: Übersetzung Radsatz RS2
- i_RS3: Übersetzung Radsatz RS3
- K14: Schaltelement, Schaltkupplung
- K15: Schaltelement, Schaltkupplung
- K26: Schaltelement, Schaltkupplung
- K36: Schaltelement, Schaltkupplung
- K45: Schaltelement, Schaltkupplung
- K56: Schaltelement, Schaltkupplung
- PR1: Planetenrad Radsatz RS1
- PR2: Planetenrad Radsatz RS2
- PR3: Planetenrad Radsatz RS3
- PT1: Planetenträger Radsatz RS1
- PT2: Planetenträger Radsatz RS2
- PT3: Planetenträger Radsatz RS3
- ϕ: Gangsprung
- RO: Rotor der Elektromaschine
- RS1: Radsatz
- RS2: Radsatz
- RS3: Radsatz
- SR1: Sonnenrad Radsatz RS1
- SR2: Sonnenrad Radsatz RS2
- SR3: Sonnenrad Radsatz RS3
- ST: Stator der Elektromaschine
- W1: Welle
- W2: Welle
- W3: Welle
- W4: Welle
- W5: Welle
- W6: Welle

## Patentansprüche

1. Planetengetriebe für einen Hybridantrieb eines Kraftfahrzeugs, mit einem ersten Planetenradsatz (RS1), einem zweiten Planetenradsatz (RS2) und einem dritten Planetenradsatz (RS3), welche jeweils ein Sonnenrad (SR1, SR2, SR3), ein Hohlrad (HR1, HR2, HR3) und einen Planetenträger (PT1, PT2, PT3) aufweisen, und mit mehreren Schaltelementen (B03, K14, K15, K26, K25, K36, K45, K56), wobei bei dem ersten Planetenradsatz (RS1) dessen Hohlrad (HR1) mit einem gehäusefesten Bauteil verbindbar ist, wobei bei dem ersten Planetenradsatz (RS1) dessen Planetenträger (PT1) mit dem Hohlrad (HR2) des zweiten Planetenradsatzes (RS2) antriebsverbunden ist, wobei bei dem zweiten Planetenradsatz (RS2) dessen Planetenträger (PT2) mit dem Hohlrad (HR3) des dritten Planetenradsatzes (RS3) verbunden sowie bei dem zweiten Planetenradsatz (RS2) dessen Sonnenrad (SR2) von einer Getriebeeingangswelle (GE) antreibbar ist, wobei bei dem dritten Planetenradsatz (RS3) dessen Planetenträger (PT3) mit einer Getriebeausgangswelle (GA) verbunden ist, wobei das Sonnenrad (SR1) des ersten Planetenradsatzes (RS1) mit dem gehäusefesten Bauteil verbunden ist, und bei dem das Sonnenrad (SR3) des dritten Planetenradsatzes (RS3) mit dem Hohlrad (HR1) des ersten Planetenradsatzes (RS1) verbindbar ist, **dadurch gekennzeichnet, dass** die drei Planetenradsätze (RS1, RS2, RS3) zur Realisierung von mindestens fünf zugkraftunterbrechungsfrei schaltenden Vorwärtsgangstufen über vier Schaltelemente (B03, K14, K15, K25, K26, K36, K45, K56) schaltbar sind, wobei drei der Schaltelemente (K14, K15, K25, K26, K36, K45, K56) als Schaltkupplungen ausgebildet sind, und zwar entweder als drei unsynchronisierte formschlüssige Schaltkupplungen (K14, K15, K25, K26, K36, K45, K56) oder als zwei unsynchronisierte formschlüssige Schaltkupplungen (K14, K15, K36, K45) und ein Lastschaltelement (K25, K26, K56), insbesondere Reibschaltelement, und wobei eines der Schaltelemente als eine unsynchronisierte formschlüssige Schaltbremse (B03) ausgebildet ist, und mit wenigstens einer Elektromaschine (EM), die einer Welle (W1, W2, W3, W4, W5, W6) innerhalb des Getriebes zugeordnet ist, wobei bei dem dritten Planetenradsatz (RS3) dessen Sonnenrad (SR3) mit einem Rotor (RO) der Elektromaschine (EM) verbunden ist.

2. Planetengetriebe nach Anspruch 1, **dadurch gekennzeichnet, dass** bei dem zweiten Planetenradsatz (RS2) dessen Hohlrad (HR2) mit dem dortigen Planetenträger (PT2) verbindbar ist.

3. Planetengetriebe nach Anspruch 1 oder 2, **dadurch gekennzeichnet, dass** bei dem dritten Planetenradsatz (RS3) dessen Hohlrad (HR3) mit dem dortigen Sonnenrad (SR3) verbindbar ist.

4. Planetengetriebe nach einem der vorhergehenden Ansprüche, **dadurch gekennzeichnet, dass** bei dem zweiten Planetenradsatz (RS2) dessen Planetenträger (PT2) mit der Getriebeeingangswelle (GE) verbindbar ist.

5. Planetengetriebe nach einem der vorhergehenden Ansprüche, **dadurch gekennzeichnet, dass** bei dem dritten Planetenradsatz (RS3) dessen Hohlrad (HR3) mit dem dortigen Planetenträger (PT3) verbindbar ist.

6. Planetengetriebe nach einem der vorhergehenden Ansprüche, **dadurch gekennzeichnet, dass** bei dem dritten Planetenradsatz (RS3) dessen Hohlrad (HR3) mit der Getriebeausgangswelle (GA) verbindbar ist.

7. Planetengetriebe nach einem der vorhergehenden Ansprüche, **dadurch gekennzeichnet, dass** bei dem dritten Planetenradsatz (RS3) dessen Sonnenrad (SR3) mit der Getriebeausgangswelle (GA) verbindbar ist.

8. Planetengetriebe nach einem der vorhergehenden Ansprüche, **dadurch gekennzeichnet, dass** die Getriebeeingangswelle (GE) koaxial innerhalb der Getriebeausgangswelle (GA) angeordnet ist und sich ihre Eingangsseite an der gleichen Getriebeseite wie die Getriebeausgangswelle (GA) befindet.

9. Planetengetriebe nach einem der vorhergehenden Ansprüche, **dadurch gekennzeichnet, dass** die Elektromaschine (EM) mindestens zwei der drei Planetenradsätze (RS1, RS2, RS3) und mindestens eines der Schaltelemente (B03, K14, K15, K25, K26, K36, K45, K56) radial umschließt, wobei der mit der Getriebeausgangswelle (GA) verbundene Planetenradsatz (RS3) mit derjenigen Welle (W6) wirkverbunden oder wirkverbindbar ist, welche der Elektromaschine (EM) zugeordnet ist.

10. Planetengetriebe nach einem der vorhergehenden Ansprüche, **dadurch gekennzeichnet, dass** die Elektromaschine (EM) die zu der Getriebeausgangswelle (GA) hin zugewandten zweiten und dritten Planetenradsätze (RS2, RS3) von den insgesamt drei Planetenradsätzen (RS1, RS2, RS3) radial umschließt sowie axial übergreift, und dass die der Elektromaschine (EM) zugeordnete Welle das Sonnenrad (SR3) des dritten Planetenradsatzes (RS3) oder die mit dem Sonnenrad (SR3) des dritten Planetenradsatzes (RS3) verbundene Welle (W6) ist.

11. Planetengetriebe nach einem der Ansprüche 1 bis 7, **dadurch gekennzeichnet, dass** bei dem ersten Planetenradsatz (RS1) der Planetenträger (PT1) mit der Getriebeeingangswelle (GE) verbindbar ist.

## Claims

1. Planetary transmission for a hybrid drive of a motor vehicle, having a first planetary gear set (RS1), a second planetary gear set (RS2) and a third planetary gear set (RS3), which each have a sun gear (SR1, SR2, SR3), a ring gear (HR1, HR2, HR3) and a planet carrier (PT1, PT2, PT3), and having multiple shift elements (B03, K14, K15, K26, K25, K36, K45, K56), wherein, in the first planetary gear set (RS1), the ring gear (HR1) thereof is connectable to a component fixed with respect to a housing, wherein, in the first planetary gear set (RS1), the planet carrier (PT1) thereof is drivingly connected to the ring gear (HR2) of the second planetary gear set (RS2), wherein, in the second planetary gear set (RS2), the planet carrier (PT2) thereof is connected to the ring gear (HR3) of the third planetary gear set (RS3) and, in the second planetary gear set (RS2), the sun gear (SR2) thereof can be driven by a transmission input shaft (GE), wherein, in the third planetary gear set (RS3), the planet carrier (PT3) thereof is connected to a transmission output shaft (GA), wherein the sun gear (SR1) of the first planetary gear set (RS1) is connected to the component fixed with respect to the housing, and wherein the sun gear (SR3) of the third planetary gear set (RS3) is connectable to the ring gear (HR1) of the first planetary gear set (RS1), **characterized in that** the three planetary gear sets (RS1, RS2, RS3) can be shifted so as to realize at least five forward gear ratio stages, which can be shifted without interruption in traction power, by means of four shift elements (B03, K14, K15, K25, K26, K36, K45, K56), wherein three of the shift elements (K14, K15, K25, K26, K36, K45, K56) are formed as shift clutches, specifically either as three non-synchronized positively locking shift clutches (K14, K15, K25, K26, K36, K45, K56) or as two non-synchronized positively locking shift clutches (K14, K15, K36, K45) and one powershift element (K25, K26, K56), in particular friction-type shift element, and wherein one of the shift elements is formed as a non-synchronized positively locking shift brake (B03), and having at least one electric machine (EM) which is assigned to a shaft (W1, W2, W3, W4, W5, W6) within the transmission, wherein, in the third planetary gear set (RS3), the sun gear (SR3) thereof is connected to a rotor (RO) of the electric machine (EM).

2. Planetary transmission according to Claim 1, **characterized in that**, in the second planetary gear set (RS2), the ring gear (HR2) thereof is connectable to the planet carrier (PT2) therein.

3. Planetary transmission according to Claim 1 or 2, **characterized in that**, in the third planetary gear set (RS3), the ring gear (HR3) thereof is connectable to the sun gear (SR3) therein.

4. Planetary transmission according to one of the preceding claims, **characterized in that**, in the second planetary gear set (RS2), the planet carrier (PT2) thereof is connectable to the transmission input shaft (GE) .

5. Planetary transmission according to one of the preceding claims, **characterized in that**, in the third planetary gear set (RS3), the ring gear (HR3) thereof is connectable to the planet carrier (PT3) therein.

6. Planetary transmission according to one of the preceding claims, **characterized in that**, in the third planetary gear set (RS3), the ring gear (HR3) thereof is connectable to the transmission output shaft (GA).

7. Planetary transmission according to one of the preceding claims, **characterized in that**, in the third planetary gear set (RS3), the sun gear (SR3) thereof is connectable to the transmission output shaft (GA).

8. Planetary transmission according to one of the preceding claims, **characterized in that** the transmission input shaft (GE) is arranged coaxially within the transmission output shaft (GA), and the input side thereof is situated on the same side of the transmission as a transmission output shaft (GA).

9. Planetary transmission according to one of the preceding claims, **characterized in that** the electric machine (EM) radially surrounds at least two of the three planetary gear sets (RS1, RS2, RS3) and at least one of the shift elements (B03, K14, K15, K25, K26, K36, K45, K56), wherein the planetary gear set (RS3) connected to the transmission output shaft (GA) is operatively connected or operatively connectable to that shaft (W6) which is assigned to the electric machine (EM).

10. Planetary transmission according to one of the preceding claims, **characterized in that** the electric machine (EM) radially surrounds, and engages axially over, the second and third planetary gear sets (RS2, RS3), which face toward the transmission output shaft (GA), of the total of three planetary gear sets (RS1, RS2, RS3), and **in that** the shaft assigned to the electric machine (EM) is the sun gear (SR3) of the third planetary gear set (RS3) or is the shaft (W6) which is connected to the sun gear (SR3) of the third planetary gear set (RS3).

11. Planetary transmission according to one of Claims 1 to 7, **characterized in that**, in the first planetary gear set (RS1), the planet carrier (PT1) is connectable to the transmission input shaft (GE).

## Revendications

1. Transmission à engrenages planétaires pour un entraînement hybride d'un véhicule automobile, avec un premier train de roues satellites (RS1), un deuxième train de roues satellites (RS2) et un troisième train de roues satellites (RS3), qui présentent respectivement une roue solaire (SR1, SR2, SR3), une couronne dentée (HR1, HR2, HR3) et un porte-satellites (PT1, PT2, PT3), et avec plusieurs éléments de changement de vitesse (B03, K14, K15, K26, K25, K36, K45, K56), dans laquelle, dans le premier train de roues satellites (RS1) sa couronne dentée (HR1) peut être assemblée à une partie fixe du boîtier, dans laquelle dans le premier train de roues satellites (RS1) son porte-satellites (PT1) est en liaison d'entraînement avec la couronne dentée (HR2) du deuxième train de roues satellites (RS2), dans laquelle dans le deuxième train de roues satellites (RS2) son porte-satellites (PT2) est relié à la couronne dentée (HR3) du troisième train de roues satellites (RS3) et dans le deuxième train de roues satellites (RS2) sa roue solaire (SR2) peut être entraînée par un arbre d'entrée de la transmission (GE), dans laquelle dans le troisième train de roues satellites (RS3) son porte-satellites (PT3) est relié à un arbre de sortie de la transmission (GA), dans laquelle la roue solaire (SR1) du premier train de roues satellites (RS1) est assemblée à la partie fixe du boîtier, et dans laquelle la roue solaire (SR3) du troisième train de roues satellites (RS3) peut être reliée à la couronne dentée (HR1) du premier train de roues satellites (RS1), **caractérisée en ce que** les trois trains de roues satellites (RS1, RS2, RS3) sont commutables au moyen de quatre éléments de changement de vitesse (B03, K14, K15, K25, K26, K36, K45, K56) pour la réalisation d'au moins cinq rapports de marche avant se commutant sans interruption de la transmission de la force de traction, dans laquelle trois des éléments de changement de vitesse (K14, K15, K25, K26, K36, K45, K56) sont réalisés sous forme d'embrayage, notamment soit sous forme de trois embrayages à emboîtement non synchronisés (K14, K15, K25, K26, K36, K45, K56) soit sous forme de deux embrayages à emboîtement non synchronisés (K14, K15, K36, K45) et un élément de changement de vitesse en charge (K25, K26, K56), en particulier un élément de changement de vitesse à friction, et dans laquelle un des éléments de changement de vitesse est réalisé sous forme de frein de changement de vitesse par emboîtement non synchronisé (B03), et avec au moins une machine électrique (EM), qui est associée à un arbre (W1, W2, W3, W4, W5, W6) à l'intérieur de la transmission, dans laquelle dans le troisième train de roues satellites (RS3) sa roue solaire (SR3) est reliée à un rotor (RO) de la machine électrique (EM).

2. Transmission à engrenages planétaires selon la revendication 1, **caractérisée en ce que** dans le deuxième train de roues satellites (RS2) sa couronne dentée (HR2) peut être reliée au porte-satellites (PT2) de celui-ci.

3. Transmission à engrenages planétaires selon la revendication 1 ou 2, **caractérisée en ce que** dans le troisième train de roues satellites (RS3) sa couronne dentée (HR3) peut être reliée à la roue solaire (SR3) de celui-ci.

4. Transmission à engrenages planétaires selon l'une quelconque des revendications précédentes, **caractérisée en ce que** dans le deuxième train de roues satellites (RS2) son porte-satellites (PT2) peut être relié à l'arbre d'entrée de la transmission (GE).

5. Transmission à engrenages planétaires selon l'une quelconque des revendications précédentes, **caractérisée en ce que** dans le troisième train de roues satellites (RS3) sa couronne dentée (HR3) peut être reliée au porte-satellite (PT3) de celui-ci.

6. Transmission à engrenages planétaires selon l'une quelconque des revendications précédentes, **caractérisée en ce que** dans le troisième train de roues satellites (RS3) sa couronne dentée (HR3) peut être reliée à l'arbre de sortie de la transmission (GA).

7. Transmission à engrenages planétaires selon l'une quelconque des revendications précédentes, **caractérisée en ce que** dans le troisième train de roues satellites (RS3) sa roue solaire (SR3) peut être reliée à l'arbre de sortie de la transmission (GA).

8. Transmission à engrenages planétaires selon l'une quelconque des revendications précédentes, **caractérisée en ce que** l'arbre d'entrée de la transmission (GE) est disposé de façon coaxiale à l'intérieur de l'arbre de sortie de la transmission (GA) et son côté d'entrée se trouve sur le même côté de la transmission que l'arbre de sortie de la transmission (GA).

9. Transmission à engrenages planétaires selon l'une quelconque des revendications précédentes, **caractérisée en ce que** la machine électrique (EM) entoure radialement au moins deux des trois trains de roues satellites (RS1, RS2, RS3) et au moins un des éléments de changement de vitesse (B03, K124, K15, K25, K26, K36, K45, K56), dans laquelle le train de roues satellites (RS3) relié à l'arbre de sortie de la transmission (GA) est ou peut être mis en liaison active avec l'arbre (W6), qui est associé à la machine électrique (EM).

10. Transmission à engrenages planétaires selon l'une quelconque des revendications précédentes, **caractérisée en ce que** la machine électrique (EM) entoure radialement et recouvre axialement les deuxième et troisième trains de roues satellites (RS2, RS3) tournés vers l'arbre de sortie de la transmission (GA) du total des trois trains de roues satellites (RS1, RS2, RS3), et **en ce que** l'arbre associé à la machine électrique (EM) est la roue solaire (SR3) du troisième train de roues satellites (RS3) ou l'arbre (W6) relié à la roue solaire (SR3) du troisième train de roues satellites (RS3) .

11. Transmission à engrenages planétaires selon l'une quelconque des revendications 1 à 7, **caractérisée en ce que** dans le premier train de roues satellites (RS1) le porte-satellites (PT1) peut être relié à l'arbre d'entrée de la transmission (GE).
